# FASCICULE DE BREVET EUROPEEN

(11) **EP 2 289 148 B1**
(45) Date de publication et mention de la délivrance du brevet: **18.03.2015**
(21) Numéro de dépôt: 10702919.1
(22) Date de dépôt: 07.01.2010
(51) Int. Cl.: H02K 1/32, H02K 3/24, H02K 9/00

(54) **ROTORS DES MACHINES TOURNANTES ELECTRIQUES**
ROTOR FÜR EINE ELEKTRISCHE DREHENDE MASCHINE
ROTOR FOR AN ELECTRIC ROTATING MACHINE

(30) Priorité: 07.01.2009 FR 0900030
(43) Date de publication de la demande: 02.03.2011
(73) Titulaire: Moteurs Leroy Somer, 16000 Angouleme (FR)
(72) Inventeur: DUTAU, Alexis, 16000 Angouleme (FR)
(74) Mandataire: Tanty, François
(86) Numéro de dépôt international: PCT/IB2010/050053
(87) Numéro de publication internationale: WO 2010/079455

(56) Documents cités:
- DE-C- 209 964
- FR-A- 2 465 349
- GB-A- 2 425 662
- SU-A1- 1 101 970
- US-A- 3 846 651
- US-A- 4 513 218

## Description

La présente invention a pour objet un rotor bobiné pour machine électrique tournante.

La présente invention s'applique plus particulièrement mais non exclusivement au refroidissement des enroulements du rotor, notamment de machines électriques tournantes ouvertes, monophasées ou polyphasées, ayant une vitesse de rotation comprise entre 0 et 6000 tours par minute et une puissance inférieure ou égale à 25 MW.

On désigne par « machine électrique tournante ouverte » une machine refroidie par une circulation d'air prélevé à l'extérieur de la machine.

Pour assurer le refroidissement des enroulements d'un rotor, il est connu de réaliser les enroulements avec des têtes de bobine aérées et des parties d'enroulement parallèles à l'axe de rotation de la machine, encore appelées « parties droites», maintenues par des cales de serrage.

Il est connu par le brevet US 4513 218 d'utiliser les interstices ménagés dans la partie droite des enroulements pour faire circuler un fluide de refroidissement.

Il est également connu par le brevet US 6 661 133 de disposer entre les enroulements et la tôle magnétique formant le corps des pôles du rotor, un canal s'étendant le long de la partie droite des enroulements, dans lequel circule un fluide de refroidissement.

La demande GB 2 425 662 divulgue un rotor de machine électrique tournante comportant des pôles autour desquels sont bobinés des enroulements de conducteurs électriques. Des bandes pleines sont disposées entre deux groupes de conducteurs des enroulements.

Il existe un besoin pour améliorer encore le refroidissement des enroulements d'un rotor de machine électrique tournante.

L'invention a pour objet, selon l'un de ses aspects, un rotor pour machine électrique tournante s'étendant selon un axe longitudinal, comportant :
- au moins deux pôles définissant entre eux un espace interpolaire et,
- des enroulements de conducteurs électriques bobinés autour des pôles, ces enroulements comportant une partie droite s'étendant le long de l'axe longitudinal du rotor, au moins un pôle du rotor, notamment chaque pôle du rotor, comportant une entretoise disposée le long d'au moins une portion de la partie droite entre au moins deux groupes de conducteurs des enroulements pour ménager au moins un canal de refroidissement entre les deux groupes de conducteurs, permettant une circulation longitudinale et/ou transversale d'un fluide de refroidissement, notamment d'air, au sein des enroulements.

L'invention permet d'améliorer les échanges thermiques à l'intérieur des enroulements et, en scindant les enroulements en groupes de conducteurs entre lesquels le fluide de refroidissement peut circuler, d'améliorer significativement l'efficacité thermique du refroidissement du rotor, tout en étant relativement simple à mettre en oeuvre.

Le terme « groupe de conducteurs » doit être compris de façon très large, un groupe de conducteurs selon l'invention pouvant en section dans un plan de coupe transversal perpendiculaire à l'axe longitudinal du rotor être constitué par un ou plusieurs conducteurs électriques, de préférence entre 10 et 300 conducteurs, lesquels peuvent être jointifs au sein du groupe. L'écartement entre deux groupes adjacents, grâce à l'entretoise, peut aller de 2 à 40 mm, et la circulation du fluide de refroidissement dans le canal de refroidissement peut s'effectuer à travers une section de passage allant de 40 à 4000 mm². Une plus grande dimension transversale du canal de refroidissement peut aller par exemple de 10 à 200 mm.

Lorsque le fluide de refroidissement est l'air, on désigne par "canal d'aération" le canal de refroidissement.

On ne parlera par la suite que de « canal d'aération », bien que l'invention ne soit pas limitée à l'air comme fluide de refroidissement.

Au moins un pôle du rotor, par exemple chaque pôle, comporte par exemple une entretoise s'étendant de façon continue le long d'au moins une portion de la longueur de la partie droite des enroulements, par exemple sur au moins la moitié, voire toute la longueur de la partie droite, de façon à ce que le canal d'aération ne permette qu'une circulation longitudinale du fluide de refroidissement au sein des enroulements.

L'entretoise comporte par exemple un support s'étendant de façon continue le long d'au moins une portion de la longueur de la partie droite, par exemple au moins la moitié de la longueur de celle-ci, et le canal d'aération est fermé latéralement par le support pour empêcher une circulation transversale du fluide de refroidissement.

Une telle entretoise peut comporter un unique élément d'entretoise s'étendant entre les deux groupes de conducteurs, de façon continue le long de l'axe longitudinal.

En variante, l'entretoise comporte une pluralité d'éléments d'entretoise disposés le long de l'axe longitudinal, ces éléments d'entretoise étant par exemple espacés selon un pas constant ou non le long du canal d'aération, la valeur du pas allant par exemple de 10 à 200 mm, mésurée entre les centres de deux éléments d'entretoise adjacents.

Une entretoise comportant une pluralité d'éléments d'entretoise peut permettre, en raison des discontinuités entre deux éléments d'entretoise consécutifs, d'augmenter la surface d'échange thermique entre les conducteurs électriques des enroulements et le fluide de refroidissement et, par conséquent d'améliorer encore le refroidissement des enroulements.

En variante ou en combinaison avec ce qui précède, au moins un pôle du rotor, ou encore chaque pôle, peut comporter une entretoise s'étendant de façon discontinue le long d'au moins une portion de la longueur de la partie droite, notamment sur la moitié de la longueur, voire toute la longueur de la partie droite, de façon à ménager au moins un canal d'aération permettant une circulation à la fois transversale et longitudinale du fluide de refroidissement au sein des enroulements.

L'entretoise comporte par exemple une pluralité d'éléments de support disposés par exemple dans l'espace interpolaire le long de l'axe longitudinal, chaque élément de support comportant un élément d'entretoise et étant disposé régulièrement ou non le long de l'axe longitudinal.

Avec une telle entretoise, le canal d'aération n'est par exemple fermé latéralement qu'au niveau de chaque élément de support. Entre deux éléments de support, la circulation du fluide de refroidissement est par exemple possible transversalement dans le canal d'aération, ce qui peut permettre d'améliorer encore le refroidissement des conducteurs électriques des enroulements.

Le ou les éléments d'entretoise peuvent présenter une section transversale creuse, définissant au moins partiellement le canal d'aération. Cela peut faciliter la circulation du fluide de refroidissement et limiter les pertes de charge au rotor.

Le ou les éléments d'entretoise peuvent présenter sur au moins une partie de leur longueur, notamment sur toute leur longueur, des perturbateurs faisant saillie dans le canal d'aération. De tels perturbateurs peuvent créer des chicanes dans le canal d'aération et jouer le rôle de perturbateurs pour améliorer encore les échanges thermiques en augmentant les coefficients d'échange thermique et la surface d'échange thermique entre l'entretoise et le fluide de refroidissement.

Les perturbateurs s'étendent par exemple sur au moins une partie de la hauteur du canal d'aération, notamment sur toute la hauteur du canal d'aération.

Selon un exemple de mise en oeuvre de l'invention, l'entretoise comporte des éléments d'entretoise réalisés à l'aide d'une ou plusieurs cales introduites dans la partie droite entre deux groupes de conducteurs électriques des enroulements. Ces cales peuvent être creuses ou pleines.

Selon un autre exemple de mise en oeuvre de l'invention, l'entretoise est intégrée à un système de serrage des conducteurs électriques de la partie droite.

Selon un autre exemple de mise en oeuvre de l'invention, l'entretoise comporte des éléments d'entretoise formés d'excroissances réalisées d'une seule pièce avec les tôles magnétiques du rotor, par exemple avec chaque tôle du rotor, ce qui peut permettre d'éviter d'introduire des pièces additionnelles pour la réalisation des canaux d'aération et d'améliorer encore l'échange thermique entre la tôle magnétique du rotor et le fluide de refroidissement. Ces excroissances peuvent être creuses ou pleines.

L'entretoise peut comporter deux éléments d'entretoise disposés entre au moins deux groupes distincts de conducteurs électriques des enroulements associés à un pôle du rotor, ces éléments d'entretoise définissant au moins deux canaux d'aération superposés.

Le rapport entre la hauteur totale cumulée du ou des canaux d'aération ménagés au sein de la partie droite des enroulements d'un pôle et la hauteur totale des conducteurs électriques de l'enroulement dans l'encoche correspondante du rotor, mesurées parallèlement à l'axe selon lequel s'étend un pôle, est par exemple compris entre 1 et 50 %, notamment entre 10 et 30 %.

Le rapport entre la largeur du canal d'aération ménagé au sein de la partie droite des enroulements et la largeur de l'encoche, mesurées perpendiculairement à l'axe selon lequel s'étend un pôle, est par exemple supérieur à 20 %, notamment à 70 %, ce qui peut faciliter la circulation du fluide de refroidissement dans le canal d'aération.

Les pôles du rotor sont par exemple des pôles saillants comportant un corps de pôle et des épanouissements polaires et l'entretoise dans la partie droite des enroulements d'au moins un pôle du rotor, notamment de chaque pôle du rotor, peut comporter au moins un deuxième élément d'entretoise disposé le long d'au moins une portion de la partie droite, notamment sur au moins la moitié de la longueur de la partie droite ou sur toute la longueur de la partie droite, entre un groupe de conducteurs des enroulements et un épanouissement polaire.

L'entretoise dans la partie droite des enroulements d'au moins un pôle du rotor, notamment de chaque pôle du rotor, peut comporter au moins un troisième élément d'entretoise disposé le long d'au moins une portion de la partie droite, notamment au moins la moitié de la longueur de la partie droite ou sur toute la longueur de la partie droite, entre un groupe de conducteurs des enroulements et le fond de l'espace interpolaire.

L'entretoise dans la partie droite des enroulements d'au moins un pôle du rotor, notamment de chaque pôle du rotor, peut comporter au moins un quatrième élément d'entretoise disposé le long d'au moins une portion de la partie droite, notamment au moins la moitié de la longueur de la partie droite ou sur toute la longueur de la partie droite, entre les groupes de conducteurs des enroulements et le corps de pôle.

On peut ainsi pour chaque pôle obtenir une circulation du fluide de refroidissement longitudinale et/ou transversale au sein de la partie droite des enroulements, une circulation entre les enroulements et les épanouissements polaires du pôle, une circulation entre les enroulements et le fond des espaces interpolaires et une circulation entre les parties droites des enroulements et le corps de pôle. La partie droite des enroulements d'un pôle peut comporter au moins quatre canaux d'aération: au moins un canal d'aération entre deux groupes de conducteurs, un canal d'aération entre les enroulements et l'épanouissement polaire, un canal d'aération entre les enroulements et le fond de l'espace interpolaire et un canal d'aération entre les enroulements et le corps de pôle.

L'entretoise dans la partie droite peut ne comporter qu'un seul deuxième élément d'entretoise et/ou qu'un seul troisième élément d'entretoise, et/ou qu'un seul quatrième élément d'entretoise tels que décrits ci-dessus.

En variante, l'entretoise dans la partie droite peut comporter une pluralité de deuxièmes et/ou de troisièmes et/ou de quatrièmes éléments d'entretoise régulièrement espacés ou non le long d'au moins une portion de la partie droite, par exemple sur au moins la moitié de la longueur de la partie droite voire toute la longueur de la partie droite.

Le deuxième et/ou troisième et/ou quatrième élément d'entretoise peut présenter une section transversale pleine ou creuse.

Au moins un pôle du rotor peut comporter au moins une entretoise dans la tête de bobine des enroulements, cette entretoise étant disposée entre au moins deux groupes de conducteurs de la tête de bobine des enroulements.

Une telle entretoise dans la tête de bobine des enroulements est par exemple réalisée à l'aide de pièces d'extrémités fixées sur des consoles principales de la tête de bobine.

L'invention a encore pour objet, selon un autre de ses aspects, une machine électrique tournante comportant un rotor tel que défini ci-dessus.

Le fluide de refroidissement est par exemple de l'air. La machine peut comporter un ou plusieurs ventilateurs, entrainés ou non par le rotor pour créer une circulation d'air forcée dans les différents canaux d'aération.

L'invention pourra être mieux comprise à la lecture de la description qui va suivre d'exemples non limitatifs de mise en oeuvre de celle-ci, et à l'examen du dessin annexé, sur lequel :
- la figure 1 est une perspective schématique et partielle d'un exemple de rotor selon l'invention,
- la figure 2 est une coupe transversale selon II-II de la figure 1,
- la figure 3 est une perspective schématique et partielle d'un autre exemple de rotor selon l'invention,
- la figure 4 est une vue de face selon IV de la figure 3,
- les figures 5 à 10 représentent des exemples de réalisation de moyen formant entretoise,
- la figure 11 est une perspective d'un autre exemple de rotor selon l'invention,
- la figure 12 est une vue de face selon XII de la figure 11,
- les figures 13 à 20 représentent d'autres exemples de réalisation des moyens formant entretoise,
- la figure 21 est une perspective d'un exemple de paquet de tôles magnétiques rotoriques pouvant être utilisé pour réaliser un rotor selon l'invention,
- la figure 22 représente isolément une tôle du paquet de la figure 21,
- les figures 23 à 27 sont des vues de têtes de bobines d'un exemple de rotor selon l'invention,
- la figure 28 est une perspective schématique et partielle d'un autre exemple de rotor selon l'invention et,
- la figure 29 est une coupe transversale selon XXIX-XXIX de la figure 28.

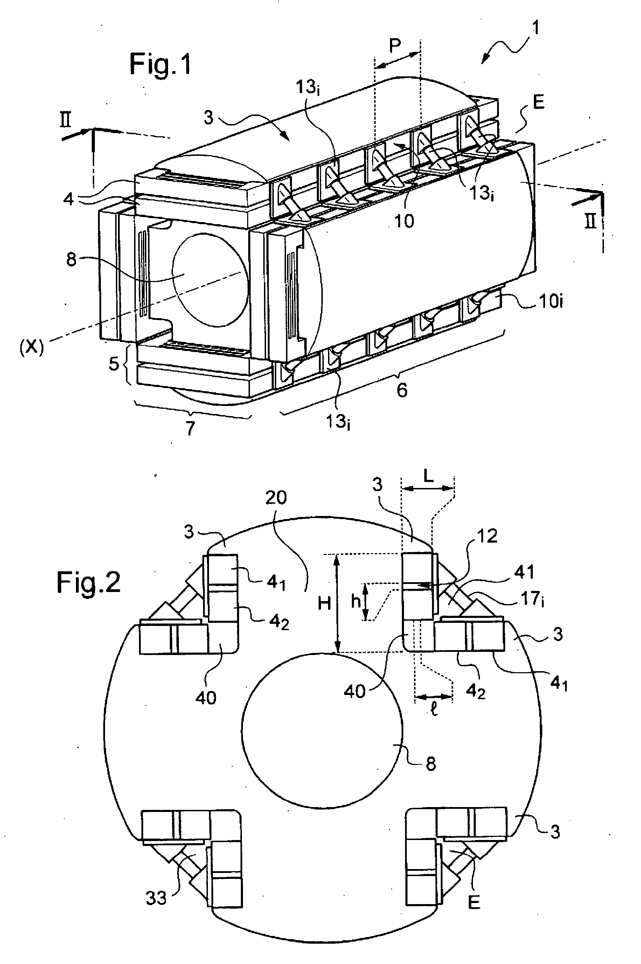

On a représenté à la figure 1 un premier exemple de rotor 1 qui s'étend selon un axe longitudinal X et comporte un paquet de tôles magnétiques 2 assemblées et formant des pôles saillants, un logement 8 étant ménagé dans le paquet de tôles pour recevoir un arbre non représenté.

Comme on peut le voir sur la figure 1, chaque pôle comporte dans l'exemple décrit un corps de pôle 20 et des épanouissements polaires 3 et deux pôles voisins définissent entre eux un espace interpolaire E formant une encoche 33.

Dans l'exemple illustré, le rotor 1 comporte quatre pôles, mais l'invention n'est pas limitée à un nombre particulier de pôles.

Le rotor 1 comporte également des conducteurs électriques 4 bobinés autour de chaque pôle et définissant des enroulements 5. Ces derniers comportent chacun une partie droite 6 aller et retour s'étendant sensiblement le long de l'axe longitudinal X et définissent une tête de bobine 7 dans chaque région d'extrémité longitudinale du rotor 1.

Comme on peut le voir sur la figure 2, un canal d'aération 40 est ménagé dans le fond de l'encoche 33 sous les enroulements 5 de deux pôles voisins.

Un autre canal d'aération 41 est également ménagé dans l'espace interpolaire E à l'extérieur des enroulements 5 de deux pôles voisins.

Dans l'exemple des figures 1 et 2, chaque pôle du rotor 1 comporte une entretoise 10 dans la partie droite 6 qui est par exemple disposée sur sensiblement toute la longueur de la partie droite 6 des enroulements de chaque pôle.

Comme on peut le voir sur les figures 1 et 2, l'entretoise 10 s'étend dans l'exemple décrit de façon discontinue le long de l'axe longitudinal X du rotor 1. L'entretoise 10 comporte par exemple une pluralité d'éléments de support 13ᵢ qui peuvent être régulièrement espacés ou non le long de l'axe longitudinal X. Deux éléments de support 13ᵢ voisins sont par exemple espacés d'un pas P compris entre 10 et 200 mm.

Chaque élément de support 13ᵢ s'étend par exemple le long de l'axe longitudinal X sur une longueur comprise entre 10 et 100 mm.

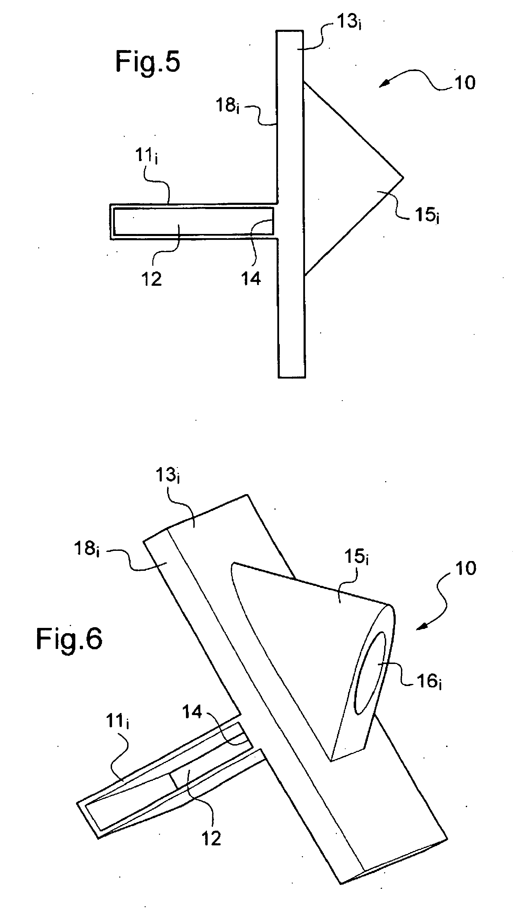

On a représenté aux figures 5 et 6 un exemple d'un tel élément de support 13ᵢ. Chaque élément de support 13ᵢ comporte un élément d'entretoise 11ᵢ, disposé entre deux groupes de conducteurs électriques 4₁ et 4₂.

Dans cet exemple, les éléments de support 13ᵢ sont intégrés à un système de serrage des enroulements 5, un tel système de serrage étant par exemple décrit dans la demande EP 1 876 686 au nom de la Demanderesse.

L'élément de support 13ᵢ comporte un socle incliné 15ᵢ pourvu d'un logement 16ᵢ pour recevoir la première extrémité d'une barre 17ᵢ dont la deuxième extrémité est reçue dans l'élément de support 13ᵢ similaire disposé dans la partie droite 6 des enroulements du pôle voisin, comme représenté aux figures 1 et 2.

Comme on peut le voir sur les figures 5 et 6, l'élément d'entretoise 11ᵢ peut présenter une section transversale creuse, cette dernière définissant partiellement un canal de refroidissement 12 au travers duquel un fluide de refroidissement peut circuler.

Dans l'exemple décrit, le fluide de refroidissement est l'air et on parlera par la suite de canal d'aération mais l'invention n'est pas limitée à cet exemple de fluide de refroidissement.

Les éléments de support 13ᵢ sont par exemple réalisés en aluminium ou en matière plastique et les éléments d'entretoise 11ᵢ sont par exemple réalisés en aluminium.

Dans l'exemple décrit, les conducteurs électriques 4 formant les enroulements 5 au sein d'un groupe sont jointifs et les interstices apparaissant lors de la superposition de deux couches successives de conducteurs électriques 4 sont comblés par une résine d'imprégnation.

Comme on peut le voir sur la figure 2, le rapport entre la hauteur *h* du canal d'aération 12 et la hauteur totale *H-h* des conducteurs électriques 4 des enroulements 5 dans une encoche 30 du rotor est par exemple compris entre 1 et 50 %.

Le rapport entre la largeur *l* du canal d'aération 12, à laquelle est le cas échéant retranché la largeur ou le diamètre d'un ou plusieurs perturbateur(s) obstruant en partie le canal, et la largeur d'encoche L est par exemple supérieur à 20%. Au sens de l'invention, il faut comprendre par "largeur d'encoche" la largeur d'un épanouissement polaire, comme représenté à la figure 2.

Dans l'exemple des figures 1 et 2, chaque élément de support 13ᵢ comporte une face 18ᵢ, s'étendant sur toute la longueur de l'élément de support 13ᵢ, cette face 18ᵢ s'appliquant contre une extrémité transversale 14 du canal d'aération 12.

Ainsi, au niveau de chaque élément de support 13ᵢ, en raison de la présence contre l'extrémité transversale 14 du canal d'aération 12 de la face 18ᵢ, seule une circulation longitudinale du fluide de refroidissement est possible à l'intérieur du canal d'aération 12 tandis qu'entre deux éléments de support 13ᵢ, le canal d'aération 12 n'est pas fermé latéralement par la face 18ᵢ, ce qui permet au fluide de refroidissement de circuler longitudinalement et transversalement dans le canal d'aération 12.

L'invention n'est pas limitée à une entretoise ne permettant la création que d'un seul canal d'aération 12 au sein de la partie droite 6 des enroulements 5.

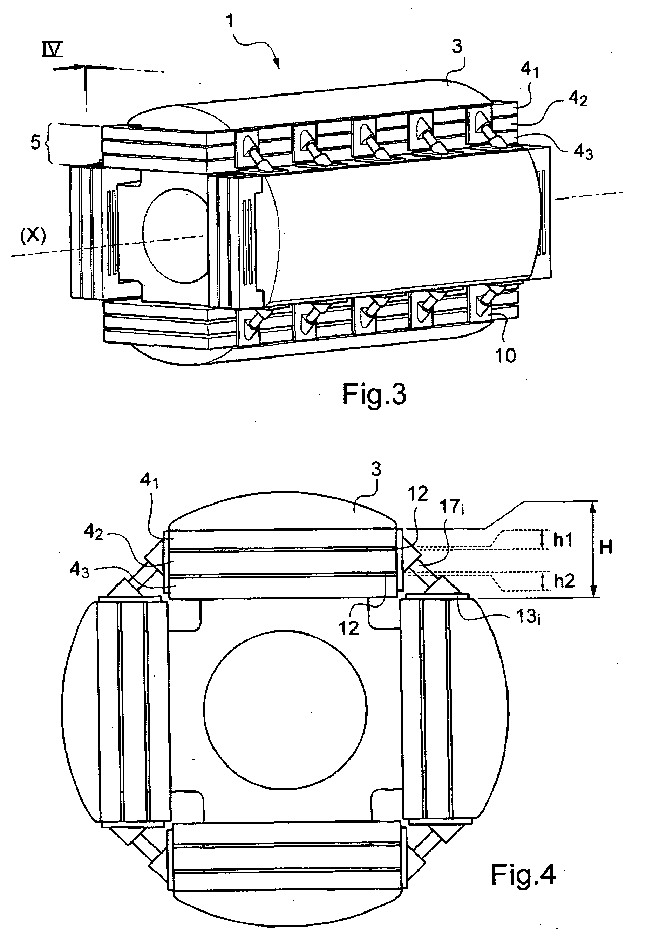

Dans l'exemple représenté aux figures 3 et 4, chaque élément de support 13ᵢ comporte deux éléments d'entretoise disposé chacun entre deux groupes de conducteurs 4₁ et 4₂ d'une part, 4₂ et 4₃ d'autre part. Les parties droites 6 représentées à la figure 3 présentent ainsi deux canaux d'aération 12 superposés.

Dans cet exemple, le rapport entre la hauteur cumulée *h1*+*h2* des canaux d'aération 12 ménagés au sein de la partie droite 6 des enroulements 5 et la hauteur totale *H-h1-h2* des conducteurs électriques 4 des enroulements dans une encoche du rotor est compris entre 1 et 50 %.

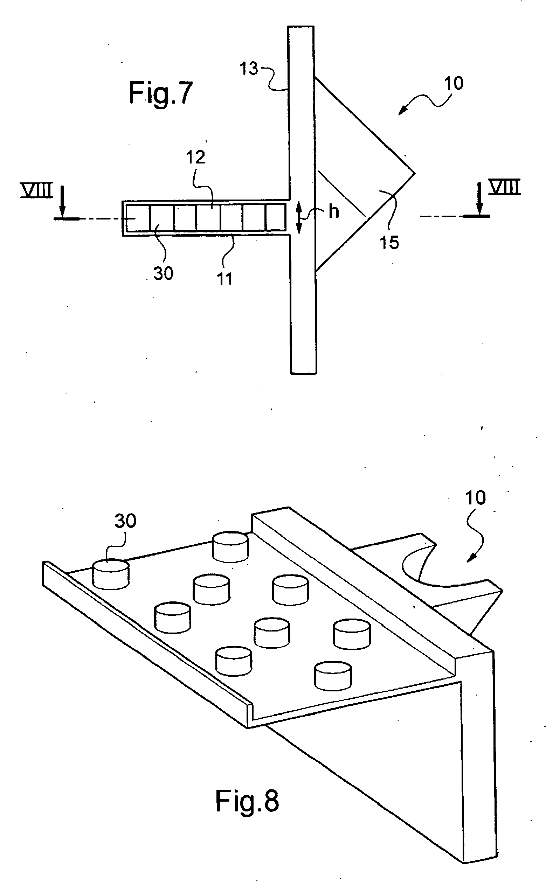

On a représenté aux figures 7 à 10 des éléments d'entretoise 11ᵢ qui diffèrent de ceux décrits en référence aux figures 5 et 6 par la présence de perturbateurs 30 faisant saillie dans le canal d'aération 12. Chaque élément d'entretoise 11ᵢ comporte par exemple une pluralité de tels perturbateurs 30. Ces perturbateurs peuvent ne s'étendre que sur une partie seulement de la hauteur *h* du canal d'aération 12 ou en variante sur toute la hauteur *h* du canal d'aération 12.

Ces perturbateurs 30 sont par exemple réalisés d'une seule pièce avec l'élément d'entretoise 11ᵢ. En variante, ces perturbateurs sont rapportés sur l'élément d'entretoise 11ᵢ.

Dans l'exemple de la figure 7 et de la figure 8, qui est une coupe transversale selon VIII-VIII de l'élément 10ᵢ de la figure 7, les perturbateurs 30 comportent des plots.

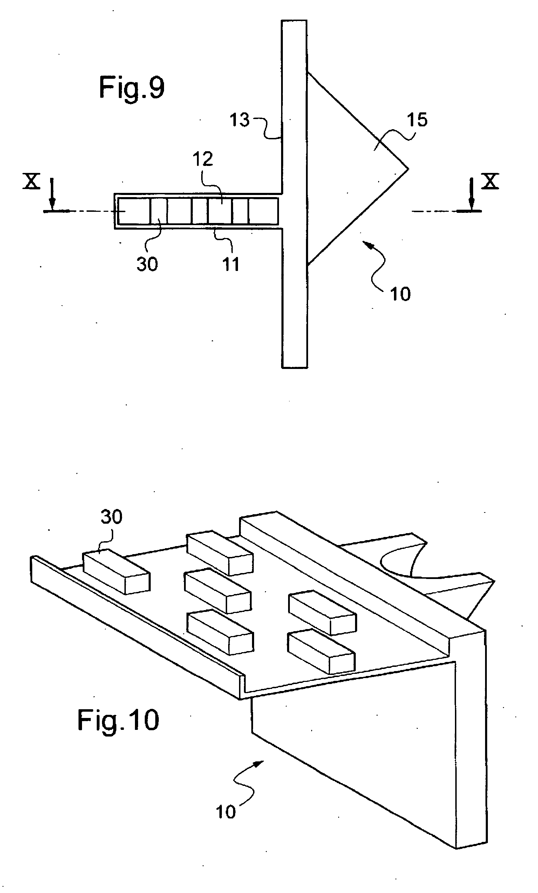

Dans l'exemple de la figure 9 et de la figure 10, qui est une coupe transversale selon X-X de l'élément 10ᵢ de la figure 9, les perturbateurs comportent des nervures, par exemple disposées en quinconce selon l'axe longitudinal.

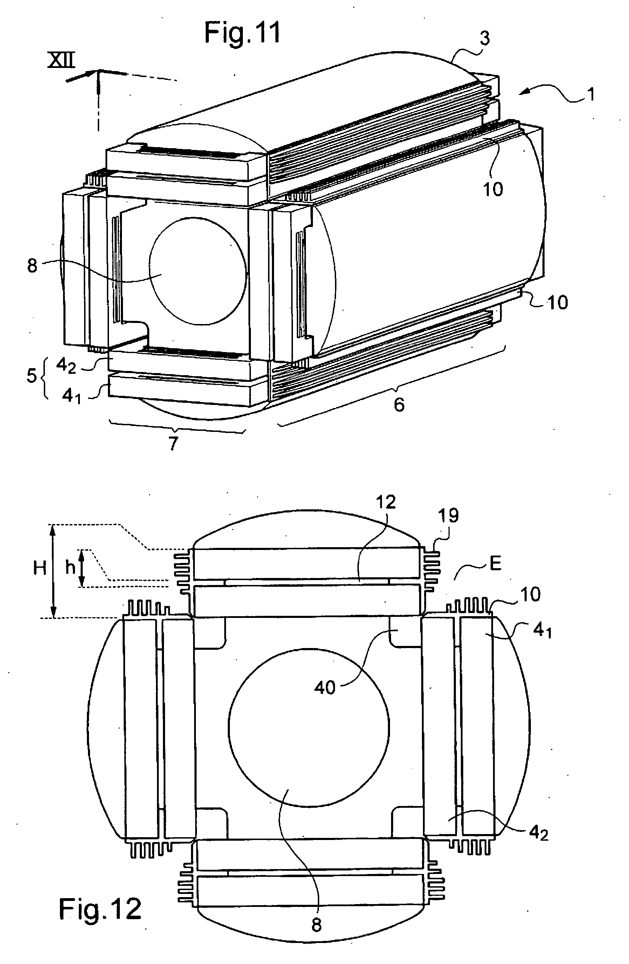

On a représenté aux figures 11 et 12 un autre exemple de rotor selon l'invention.

Dans cet exemple, l'entretoise 10 s'étend de façon continue sur toute la longueur de la partie droite 6 des enroulements 5.

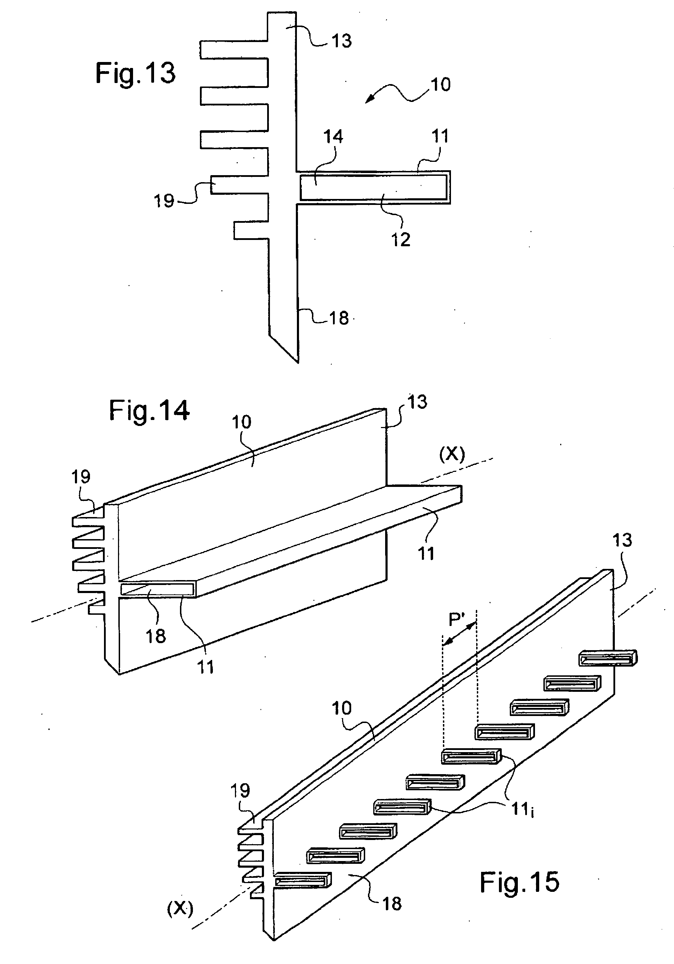

On a représenté isolément aux figures 13 à 15 des exemples d'entretoise 10 dans la partie droite 6 pour un rotor selon les figures 11 et 12.

Comme on peut le voir sur la figure 13, l'entretoise 10 peut comporter un ou plusieurs éléments d'entretoise 11ᵢ présentant une section transversale creuse ainsi qu'un support 13 qui s'étend dans cet exemple de façon continue sur toute la longueur de la partie droite 6 le long de l'axe longitudinal X.

Le support 13 comporte une face 18 et une pluralité d'ailettes 19 ménagées sur la face opposée à la face 18.

Dans l'exemple représenté à la figure 14, l'entretoise 10 ne comporte qu'un seul élément d'entretoise 11 qui s'étend de façon continue le long de l'axe longitudinal X.

L'élément d'entretoise 11 comprend une section transversale creuse qui définit selon cet exemple le canal d'aération 12.

Dans l'exemple de la figure 15, l'entretoise 10 comporte une pluralité d'éléments d'entretoise 11ᵢ régulièrement espacés le long de l'axe longitudinal X, ces éléments d'entretoise 11ᵢ ne définissant que partiellement le canal d'aération 12. Chaque élément d'entretoise 11ᵢ est par exemple espacé des éléments voisins 11ᵢ d'un pas *P'* compris entre 10 et 200 mm et chaque élément d'entretoise 11ᵢ étend sur une longueur comprise entre 10 et 100 mm.

Dans les exemples des figures 13 à 15, une extrémité transversale 14 du canal d'aération 12 est fermée sur toute la longueur de la partie droite 6 par la face 18, de façon à ne permettre que la circulation longitudinale du fluide de refroidissement, ici l'air ambiant.

L'entretoise 10 des figures 13 à 15 peut en variante comporter au moins deux éléments d'entretoise 11 agencées pour ménager au moins deux canaux d'aération superposés au sein de la partie droite 6 des enroulements, similairement à ce qui a été décrit en référence aux figures 3 et 4.

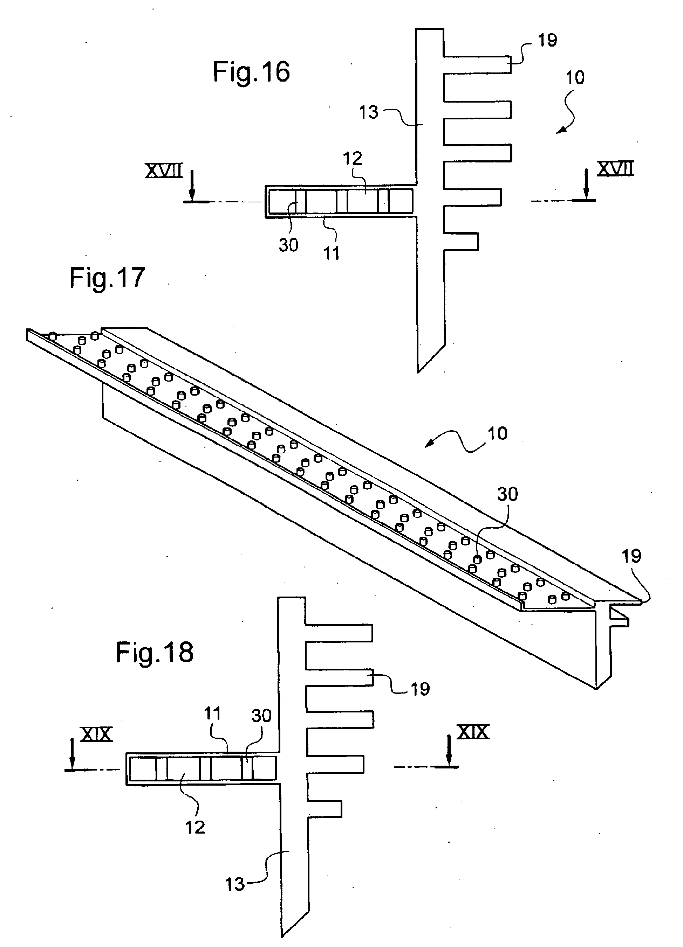

On a représenté aux figures 16 à 19 des éléments d'entretoise dans la partie droite 6 qui comportent, par rapport à ceux décrits en référence aux figures 13 à 15, des perturbateurs 30 faisant saillie dans le canal d'aération 12. Dans l'exemple de la figure 16, l'élément d'entretoise 11 ou chaque élément d'entretoise 11ᵢ comporte par exemple une pluralité de perturbateurs 30. Ces perturbateurs peuvent s'étendre sur une partie seulement de la hauteur *h* du canal d'aération 12 ou en variante sur toute la hauteur *h* du canal d'aération 12.

Ces perturbateurs 30 sont par exemple réalisés d'une seule pièce avec l'élément d'entretoise 11 ou chaque élément d'entretoise 11_{i.} En variante, ces perturbateurs sont rapportés sur l'élément d'entretoise 11 ou sur chaque élément d'entretoise 11ᵢ.

Dans l'exemple de la figure 16 et de la figure 17, qui est vue en coupe selon XVII-XVII de l'entretoise représentée à la figure 16, les perturbateurs 30 comportent des plots.

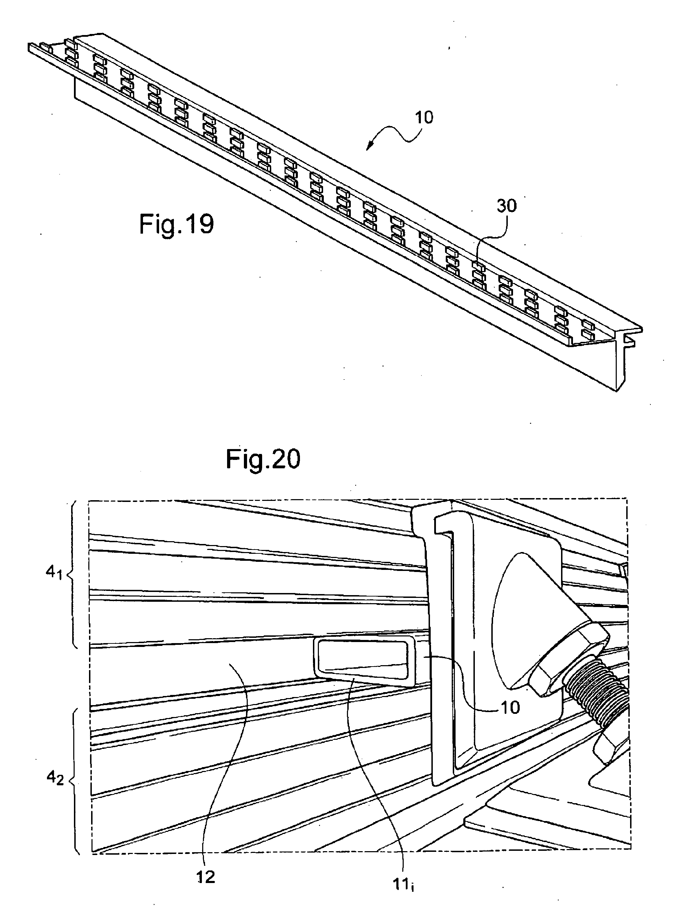

Dans l'exemple de la figure 18 et de la figure 19, qui est une vue en coupe selon XIX-XIX l'entretoise 10 représentée à la figure 18, les perturbateurs comportent des nervures, par exemple disposées en quinconce selon l'axe longitudinal.

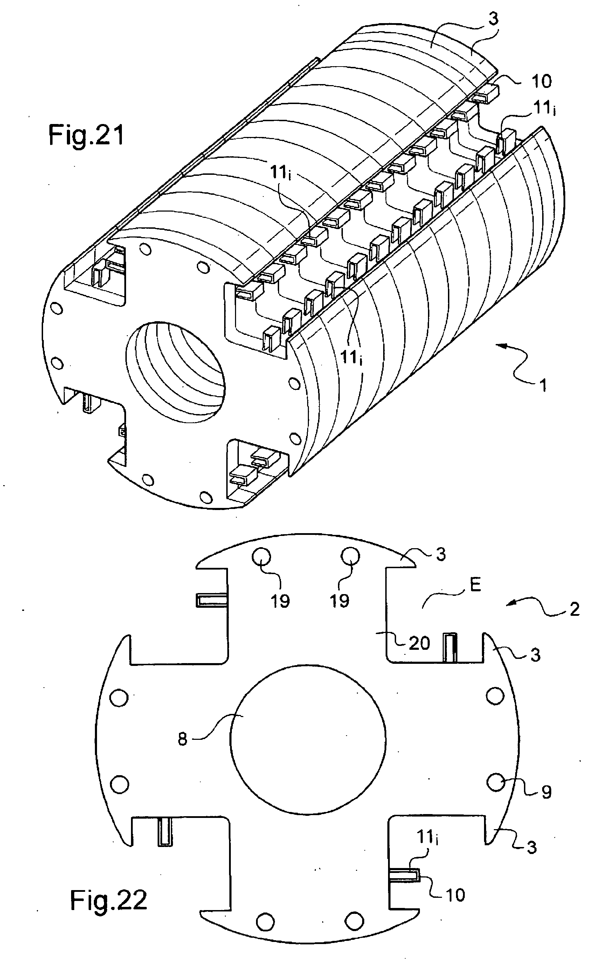

On va maintenant décrire, en référence aux figures 20 et 21, d'autres exemples de réalisation d'entretoise selon l'invention.

Dans l'exemple représenté à la figure 20, les éléments d'entretoise 11ᵢ sont réalisés à l'aide de cales présentant une section transversale creuse définissant en partie le canal d'aération 12. Dans cet exemple, l'entretoise 10 est distincte du système de serrage des enroulements de la partie droite.

Bien que dans l'exemple représenté à la figure 20, les cales soient disposées de façon discontinue le long de la partie droite 6, on ne sort pas du cadre de la présente invention lorsque les cales sont assemblées bout à bout de façon à définir un canal d'aération 12 ne permettant qu'une circulation longitudinale du fluide de refroidissement.

En variante, l'entretoise 10 comporte des éléments d'entretoise réalisés à l'aide des tôles magnétiques formant le corps du rotor, sans utiliser de pièces supplémentaires, comme représenté aux figures 21 et 22.

Comme on peut le voir sur ces figures, des tôles 2 du rotor 1 comportent dans cet exemple des excroissances 11ᵢ s'étendant dans l'espace interpolaire E.

Dans l'exemple décrit, les excroissances 11ᵢ s'étendent perpendiculairement à l'axe selon lequel s'étend chaque pôle du rotor 1.

Les excroissances 11ᵢ s'étendent par exemple de façon discontinue ou continue le long de l'axe longitudinal X.

Chacune des tôles 2 formant le pôle porte par exemple des excroissances 11ᵢ et ces tôles sont assemblées selon l'axe longitudinal X de façon à ce que les excroissances 11ᵢ s'étendent de façon continue le long de cet axe.

En variante, les tôles telles que décrites ci-dessus sont assemblées de façon à former des paquets de tôles, chaque paquet comportant entre 20 et 200 tôles. Un paquet de tôles est basculé par rapport à l'axe X, subissant une rotation autour d'un axe perpendiculaire à l'axe longitudinal X de façon à être disposé tête en bas par rapport au(x) paquet(s) de tôle voisin(s), de façon à ce que les excroissances 11ᵢ s'étendent de façon discontinue le long de l'axe longitudinal X.

Les tôles 2 du rotor comportent également dans l'exemple décrit des ouvertures 19 pour recevoir des consoles de maintien des têtes de bobine.

L'invention n'est pas limitée à un mode de réalisation particulier d'entretoise dans la partie droite. L'invention n'est en outre pas limitée à l'emploi d'entretoise dans les seules parties droites 6 des enroulements.

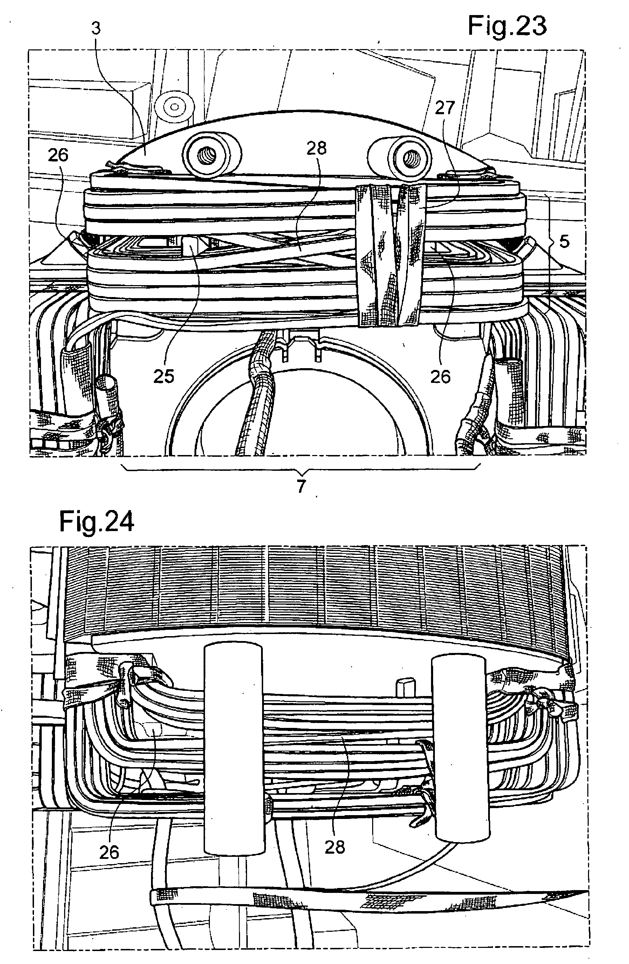

Les figures 23 et 24 représentent la tête de bobine 7 des enroulements d'un pôle, par exemple côté alimentation électrique.

Le rotor peut comporter une entretoise 25 dans la tête de bobine 7 permettant de définir un ou plusieurs canaux d'aération 26 au sein de la tête de bobine 7. Cette entretoise peut être réalisée à l'aide de pièces d'extrémités, fixées sur les consoles principales de la tête de bobine, et utilisées à la fois comme outils de bobinage et pour le refroidissement de la tête de bobine 7 des enroulements.

Le rotor comporte dans cet exemple, en plus des consoles principales de tête de bobine non représentées, deux consoles intermédiaires 25 placées au droit des consoles principales de tête de bobine. Ces consoles 25 définissent un canal d'aération 26 entre deux groupes de conducteurs électriques 4 de la tête de bobine 7.

Les deux groupes de conducteurs électriques définissant entre eux le canal d'aération 26 sont par exemple attachés par une frette 27.

Les canaux d'aération 26 ménagés au sein de la tête de bobine peuvent être partiellement obstrués par des croisements 28 de conducteurs électriques 4, comme représenté aux figures 23 et 24.

Dans l'exemple de la figure 23, seul un canal d'aération 26 est défini au sein de tête de bobine 7 des enroulements.

L'entretoise 25 peut encore être agencée de façon à définir au sein de chaque tête de bobine 7 au moins deux canaux d'aération 26 superposés, afin d'améliorer encore le refroidissement des conducteurs électriques de la tête de bobine des enroulements.

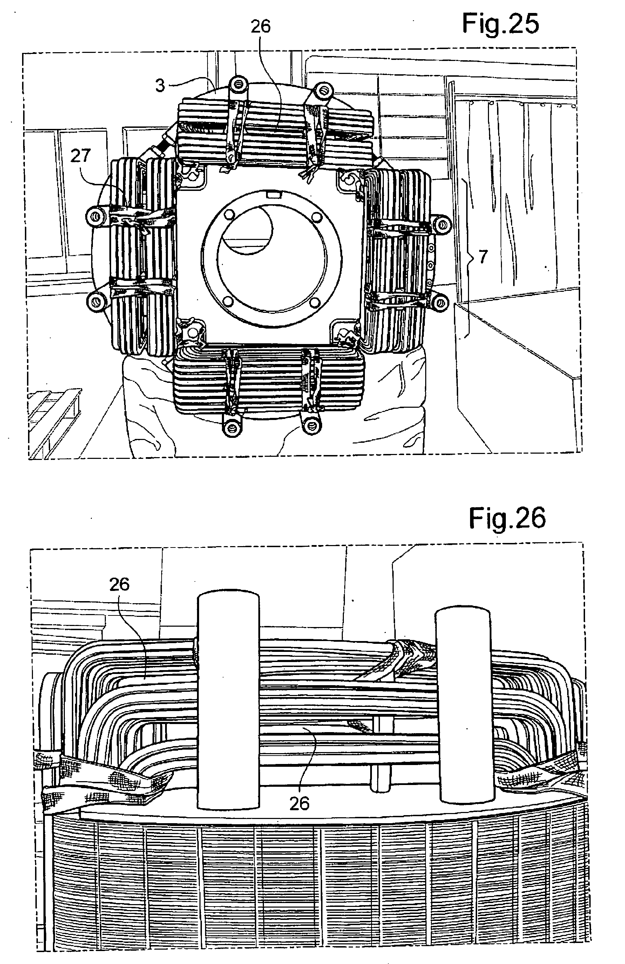

Dans l'exemple des figures 25 et 26, le rotor comporte également à l'extrémité longitudinale opposée une telle entretoise 25, ce côté opposé pouvant porter un ventilateur pour générer une circulation d'air forcé sur le rotor.

Des consoles 25 similaires à celles décrites en référence à la figure 23 définissent par exemple un canal d'aération 26 au niveau de la tête de bobine 7 à cette extrémité longitudinale du rotor.

Le canal d'aération 26 ménagé au sein de la tête de bobine peut s'étendre de façon continue, sans interruption sur toute la tête de bobine. Comme on peut le voir sur la figure 26, le canal d'aération 26 peut ne pas être obstrué par des conducteurs électriques.

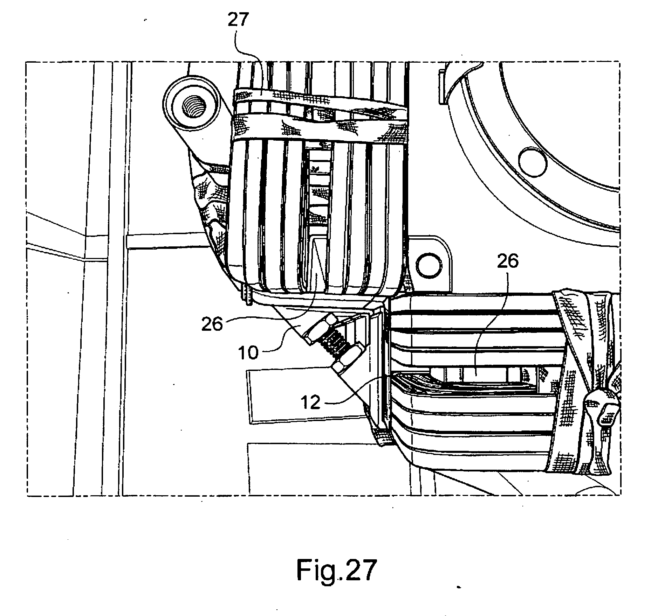

Comme représenté à la figure 27, le canal d'aération 12 ménagé au sein de la partie droite 6 peut communiquer avec le canal d'aération 26 ménagé au sein d'une tête de bobine 7, de façon à permettre la circulation du fluide de refroidissement tout autour du pôle.

On va maintenant décrire un exemple de circulation de fluide de refroidissement, qui est l'air dans l'exemple décrit, dans les enroulements 5 d'un pôle d'un rotor 1 selon l'invention.

Le rotor 1 est par exemple intégré à une machine électrique tournante comportant un ventilateur centrifuge. En variante, le ventilateur est un ventilateur à canaux multiples. Dans une autre variante encore, le ventilateur est réalisé en mettant en série un ventilateur centrifuge et un ventilateur axial.

L'air aspiré par le ventilateur traverse le canal 40 situé dans l'espace interpolaire sous les enroulements 5. De plus, l'air circule dans l'entrefer et au travers du canal 41 situé entre deux pôles consécutifs, et axialement au travers du ou des canaux 12 ménagés au sein de la partie droite 6 des enroulements.

Lorsque l'entretoise 10 s'étend de façon discontinue le long de la partie droite 6 des enroulements, comme décrit par exemple en référence aux figures 1 à 10, la discontinuité permet une circulation transversale de l'air depuis l'espace inter-polaire vers les canaux d'aération 12.

En fonctionnement, la rotation du rotor 1 engendre une augmentation de la composante tangentielle de la vitesse de l'air dans le canal interpolaire 41, ce qui permet de réalimenter en air le canal d'aération 12.

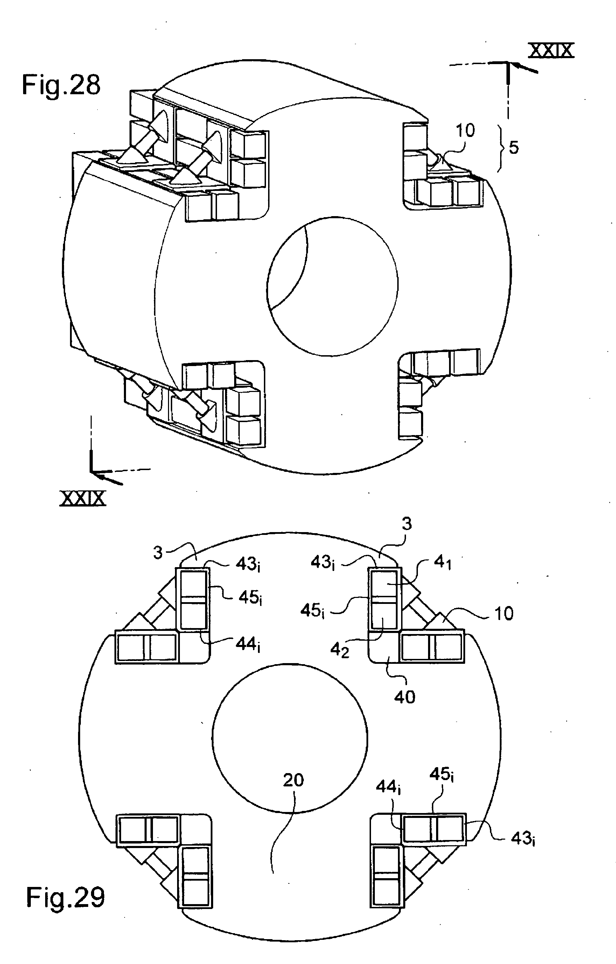

On a représenté aux figures 28 et 29 un autre exemple de rotor selon l'invention.

L'exemple de ces figures diffère de celui représenté à la figure 1 par le fait que chaque élément 13ᵢ de support de l'entretoise 10 comporte un deuxième, un troisième et un quatrième élément d'entretoise, respectivement désignés par les références 43ᵢ, 44ᵢ et 45ᵢ.

Comme on peut le voir, le deuxième élément d'entretoise 43ᵢ est disposé entre un groupe de conducteurs électriques 4₁ de la partie droite 6 et l'épanouissement polaire 3 du pôle. Le deuxième élément d'entretoise 43ᵢ permet par exemple d'éviter tout contact entre la tôle magnétique 2 et les conducteurs électriques 4 des enroulements 5.

Comme représenté aux figures 28 et 29, le troisième élément d'entretoise 44ᵢ est disposé entre un groupe de conducteurs électriques 4₂ des enroulements et le fond de l'encoche 33.

Le quatrième élément d'entretoise 45ᵢ est, comme représenté, disposé entre chaque groupe de conducteurs électriques 4ᵢ des enroulements et le corps de pôle 20.

Dans cet exemple, le deuxième élément d'entretoise 43ᵢ, le troisième élément d'entretoise 44ᵢ et le quatrième élément d'entretoise 45ᵢ présentent une section transversale pleine.

Un deuxième élément d'entretoise de section transversale pleine peut permettre d'assurer plus facilement la transmission des efforts mécaniques du paquet de tôle vers les enroulements 5.

En variante, les éléments d'entretoise décrits ci-dessus présentent une section transversale creuse de telle sorte à ce que l'air puisse circuler longitudinalement.

Dans une variante non représentée de ces figures 28 et 29, chaque élément 13ᵢ de support d'entretoise est dépourvu de deuxième et/ou troisième et/ou quatrième élément d'entretoise.

Dans une variante non représentée, l'entretoise s'étendant de façon continue le long de l'axe longitudinal X, représentée aux figures 11 et 12, peut également comporter des deuxième, troisième et quatrième éléments d'entretoise tels que décrits ci-dessus.

En outre, les deuxièmes, troisièmes et quatrième éléments d'entretoise peuvent être intégrés à des entretoises telles que décrites aux figures 3 et 4.

L'invention n'est pas limitée aux exemples qui viennent d'être décrits.

On peut par exemple combiner entre elles des caractéristiques décrites en référence à différents modes de réalisation au sein de variantes non illustrées.

L'expression « comportant un » doit être comprise comme « comportant au moins un », sauf lorsque le contraire est spécifié.

## Revendications

1. Rotor (1) pour machine électrique tournante, s'étendant selon un axe longitudinal (X), comportant :
- au moins deux pôles définissant entre eux un espace interpolaire (E) et,
- des enroulements (5) de conducteurs électriques (4) bobinés autour des pôles, ces enroulements (5) comportant une partie droite (6) s'étendant le long de l'axe longitudinal (X) du rotor,
au moins un pôle du rotor, notamment chaque pôle du rotor, comportant une entretoise (10) disposée le long d'au moins une portion de la partie droite (6) entre au moins deux groupes de conducteurs (4₁, 4₂) des enroulements (5) pour ménager au moins un canal de refroidissement (12) entre les deux groupes de conducteurs (4₁, 4₂), permettant une circulation longitudinale et/ou transversale d'un fluide de refroidissement au sein des enroulements (5), l'entretoise (10) comportant au moins un élément d'entretoise (11, 11ᵢ) présentant une section transversale creuse, définissant au moins partiellement le canal de refroidissement (12).

2. Rotor selon la revendication 1, au moins un pôle du rotor comportant une entretoise (10) s'étendant de façon continue le long d'au moins une portion de la longueur de la partie droite (6) de façon à ce que le canal de refroidissement (12) ne permette qu'une circulation longitudinale du fluide de refroidissement au sein des enroulements (5).

3. Rotor selon la revendication 2, l'élément d'entretoise (11) étant unique et s'étendant entre les deux groupes de conducteurs (4₁, 4₂) de façon continue le long de l'axe longitudinal (X).

4. Rotor selon la revendication 2, l'entretoise (10) comportant une pluralité d'éléments d'entretoise (11ᵢ) disposés le long de l'axe longitudinal (X).

5. Rotor selon l'une quelconque des revendications précédentes, au moins un pôle du rotor comportant une entretoise (10) s'étendant de façon discontinue le long d'au moins une portion de la longueur de la partie droite (6), notamment sur toute la longueur de la partie droite (6), de façon à ménager au moins un canal de refroidissement (12) permettant une circulation transversale et longitudinale du fluide de refroidissement au sein des enroulements (5).

6. Rotor selon la revendication précédente, l'entretoise (10) dans la partie droite (6) comportant une pluralité d'éléments de support (13ᵢ) disposés le long de l'axe longitudinal (X).

7. Rotor selon la revendication précédente, chaque élément de support (13ᵢ) comportant un élément d'entretoise (11ᵢ).

8. Rotor selon l'une quelconque des revendications précédentes, le ou les éléments d'entretoise (11, 11ᵢ) présentant sur au moins une partie de leur longueur, notamment sur toute leur longueur, des perturbateurs (30) faisant saillie dans le canal.

9. Rotor selon la revendication précédente, les perturbateurs (30) s'étendant sur au moins une partie de la hauteur (h) du canal.

10. Rotor selon l'une quelconque des revendications précédentes, l'entretoise (10) dans la partie droite (6) comportant des éléments d'entretoise (11ᵢ) réalisés à l'aide de cales introduites dans la partie droite entre deux groupes de conducteurs électriques des enroulements (5).

11. Rotor selon l'une quelconque des revendications 1 à 9, l'entretoise dans la partie droite (6) étant intégrée au système de serrage des conducteurs électriques de la partie droite ou
l'entretoise (10) dans la partie droite (6) comportant des éléments d'entretoise (11ᵢ) réalisés d'une seule pièce avec les tôles (2) du rotor, ou
l'entretoise (10) dans la partie droite (6) comportant au moins deux éléments d'entretoise disposés entre au moins deux groupes de conducteurs électriques distincts, (4₁, 4₂, 4₃) ces éléments d'entretoise définissant au moins deux canaux de refroidissement (12) superposés.

12. Rotor selon l'une quelconque des revendications précédentes, le rapport entre la hauteur totale cumulée (h) du ou des canaux de refroidissement ménagés au sein de la partie droite (6) des enroulements d'un pôle et la hauteur totale (H-h) des conducteurs électriques des enroulements dans l'encoche correspondante (33) du rotor étant compris entre 1 et 50 %, notamment entre 10 et 30 %.

13. Rotor selon l'une quelconque des revendications précédentes, le rapport entre la largeur (1) du canal de refroidissement (12) ménagé au sein de la partie droite des enroulements d'un pôle et la largeur d'encoche (L) correspondante (33) étant supérieur à 20 %, notamment à 70 %.

14. Rotor selon l'une quelconque des revendications précédentes, les pôles du rotor étant des pôles saillants comportant des épanouissements polaires (3) et l'entretoise (10) dans la partie droite (6) des enroulements d'au moins un pôle comportant au moins un deuxième élément d'entretoise (43ᵢ) disposé le long d'au moins une portion de la partie droite (6), notamment sur toute la longueur la partie droite, entre un groupe de conducteurs des enroulements et l'épanouissement polaire (3), ou
l'entretoise (10) dans la partie droite (6) des enroulements d'au moins un pôle comportant au moins un troisième élément d'entretoise (44ᵢ) disposé le long d'au moins une portion de la partie droite (6), notamment sur toute la longueur de la partie droite, entre un groupe de conducteurs (4) des enroulements et le fond de l'espace inter polaire (E), ou
l'entretoise (10) dans la partie droite (6) des enroulements d'au moins un pôle comportant au moins un quatrième élément d'entretoise (45ᵢ) disposé le long d'au moins une portion de la partie droite (6), notamment sur toute la longueur de la partie droite, entre un groupe de conducteurs (4) des enroulements et le corps de pôle (20),
le deuxième et/ou troisième et/ou quatrième élément d'entretoise (43ᵢ, 44ᵢ et 45ᵢ) présentant une section transversale pleine ou creuse.

15. Rotor selon l'une quelconque des revendications précédentes, au moins un pôle comportant une entretoise (25) dans la tête de bobine (7) des enroulements (5), cette entretoise (25) étant disposée entre au moins deux groupes de conducteurs (4) de la tête de bobine (7) des enroulements,
l'entretoise (25) dans la tête de bobine (7) des enroulements (5) étant réalisée à l'aide de pièces d'extrémités fixées sur des consoles principales de la tête de bobine.

## Patentansprüche

1. Rotor (1) für eine sich drehende elektrische Maschine, der sich über eine Längsachse (X) erstreckt, aufweisend:
mindestens zwei Pole, die zwischen sich einen Zwischenpolraum (E) festlegen, und
Windungen (5) aus elektrischen Leitern (4), die um die Pole gewickelt sind und einen geraden Abschnitt (6) aufweisen, der sich entlang der Längsachse (X) des Rotors erstreckt,
wobei mindestens ein Pol des Rotors, insbesondere jeder Pol des Rotors einen Abstandhalter (10) aufweist, der entlang mindestens eines Teils des geraden Abschnitts (6) zwischen mindestens zwei Leitergruppen (4₁, 4₂) der Windungen (5) angeordnet ist, um mindestens einen Kühlkanal (12) zwischen den beiden Leitergruppen (4₁, 4₂) zu bilden, der die Zirkulation eines Kühlmittels in Längsrichtung und/oder Querrichtung innerhalb der Windungen (5) erlaubt, wobei der Abstandhalter (10) mindestens ein Abstandselement (11, 11ᵢ) mit hohlem Querschnitt aufweist, der mindestens teilweise den Kühlkanal (12) festlegt.

2. Rotor nach Anspruch 1, wobei mindestens ein Pol des Rotors einen Abstandhalter (10) aufweist, der sich kontinuierlich entlang mindestens eines Teils der Länge des geraden Abschnitts (6) so erstreckt, dass der Kühlkanal (12) lediglich eine Zirkulation des Kühlmittels in Längsrichtung innerhalb der Windungen (5) zulässt.

3. Rotor nach Anspruch 2, wobei das Abstandselement ein einzelnes ist und sich zwischen den beiden Leitergruppen (4₁, 4₂) kontinuierlich entlang der Längsachse (X) erstreckt.

4. Rotor nach Anspruch 2, wobei der Abstandhalter (10) mehrere Abstandselemente (11ᵢ) aufweist, die entlang der Längsachse (X) angeordnet sind.

5. Rotor nach einem der vorhergehenden Ansprüche, wobei mindestens ein Pol des Rotors einen Abstandhalter (10) aufweist, der sich diskontinuierlich entlang mindestens eines Teils der Länge des geraden Abschnitts (6), insbesondere über die ganze Länge des geraden Abschnitts (6) so erstreckt, dass er mindestens einen Kühlkanal (12) bildet, der eine Zirkulation des Kühlmittels in Querrichtung und Längsrichtung innerhalb der Windungen (5) erlaubt.

6. Rotor nach dem vorhergehenden Anspruch, wobei der Abstandhalter (10) im geraden Abschnitt (6) mehrere Stützelemente (13ᵢ) aufweist, die entlang der Längsachse (X) angeordnet sind.

7. Rotor nach dem vorhergehenden Anspruch, wobei jedes Stützelement (13ᵢ) ein Abstandselement (11ᵢ) aufweist.

8. Rotor nach einem der vorhergehenden Ansprüche, wobei das bzw. die Abstandselemente (11, 11ᵢ) auf mindestens einem Teil ihrer Länge, insbesondere auf ihrer ganzen Länge Perturbatoren (30) aufweisen, die in den Kanal ragen.

9. Rotor nach dem vorhergehenden Anspruch, wobei sich die Perturbatoren (30) über mindestens einen Teil der Höhe (h) des Kanals erstrecken.

10. Rotor nach einem der vorhergehenden Ansprüche, wobei der Abstandhalter (10) im geraden Abschnitt (6) Abstandselemente (11ᵢ) aufweist, die mittels Einlagen gebildet sind, die im geraden Abschnitt zwischen zwei Gruppen elektrischer Leiter der Windungen (5) eingefügt sind.

11. Rotor nach einem der Ansprüche 1 bis 9, wobei der Abstandhalter im geraden Abschnitt (6) in das Klemmsystem der elektrischen Leiter des geraden Abschnitts integriert ist oder
der Abstandhalter (10) im geraden Abschnitt Abstandselemente (11ᵢ) aufweist, die einstückig mit den Blechen (2) des Rotors ausgebildet sind, oder
der Abstandhalter (10) im geraden Abschnitt (6) mindestens zwei Abstandselemente aufweist, die zwischen mindestens zwei verschiedenen Gruppen elektrischer Leiter (4₁, 4₂, 4₃) angeordnet sind und mindestens zwei übereinanderliegende Kühlkanäle (12) bilden.

12. Rotor nach einem der vorhergehenden Ansprüche, wobei das Verhältnis zwischen der akkumulierten gesamten Höhe (h) des bzw. der innerhalb des geraden Abschnitts (6) der Windungen eines Pols gebildeten Kühlkanäle und der gesamten Höhe (H-h) der elektrischen Leiter der Windungen im entsprechenden Schlitz (33) des Rotors im Bereich liegt, der von 1 und 50%, insbesondere 10 und 30% eingeschlossen ist.

13. Rotor nach einem der vorhergehenden Ansprüche, wobei das Verhältnis zwischen der Größe (l) des innerhalb des geraden Abschnitts der Windungen eines Pols gebildeten Kühlkanals (12) und der Größe (L) eines entsprechenden Schlitzes (33) mehr als 20%, insbesondere mehr als 70% beträgt.

14. Rotor nach einem der vorhergehenden Ansprüche, wobei die Pole des Rotors Schenkelpole sind, die Polschuhe (3) aufweisen, und wobei der Abstandhalter (10) im geraden Abschnitt (6) der Windungen mindestens eines Pols mindestens ein zweites Abstandselement (43ᵢ) aufweist, das entlang mindestens eines Teils des geraden Abschnitts (6), insbesondere über die gesamte Länge des geraden Abschnitts zwischen einer Leitergruppe der Windungen und dem Polschuh (3) angeordnet ist,
oder
der Abstandhalter (10) im geraden Abschnitt (6) der Windungen mindestens eines Pols mindestens ein drittes Abstandselement (44ᵢ) aufweist, das entlang mindestens eines Teils des geraden Abschnitts (6), insbesondere über die gesamte Länge des geraden Abschnitts zwischen einer Leitergruppe (4) der Windungen und dem Boden des Zwischenpolraums (E) angeordnet ist, oder
der Abstandhalter (10) im geraden Abschnitt (6) der Windungen mindestens eines Pols mindestens ein viertes Abstandselement (45ᵢ) aufweist, das entlang mindestens eines Teils des geraden Abschnitts (6), insbesondere über die gesamte Länge des geraden Abschnitts zwischen einer Leitergruppe (4) der Windungen und dem Polkörper (20) angeordnet ist,
wobei das zweite und/oder das dritte und/oder das vierte Abstandselement (43ᵢ, 44ᵢ, und 45ᵢ) einen vollen oder hohlen Querschnitt aufweisen.

15. Rotor nach einem der vorhergehenden Ansprüche, wobei mindestens ein Pol einen Abstandhalter (25) im Wickelkopf (7) der Windungen (5) aufweist, wobei dieser Abstandhalter (5) zwischen mindestens zwei Leitergruppen (4) des Wickelkopfs (7) der Windungen angeordnet ist,
wobei der Abstandhalter (25) im Wickelkopf (7) der Windungen (5) mittels Endstücken gebildet ist, die auf Hauptträgern des Wickelkopfs befestigt sind.

## Claims

1. A rotor (1) for a rotary electric machine, the rotor extending along a longitudinal axis (X) and comprising:
- at least two poles defining between them an inter-pole space (E); and
- windings (5) of electrical conductors (4) wound around the poles, said windings (5) including straight portions (6) extending along the longitudinal axis (X) of the rotor;
at least one pole of the rotor, and in particular each pole of the rotor, including a spacer (10) placed along at least a fraction of the straight portion (6) between at least two conductor groups (4₁, 4₂) of the windings (5) so as to form at least one cooling channel (12) between the two conductor groups (4₁, 4₂), enabling a cooling fluid to flow longitudinally and/or transversely within the windings (5), the spacer (10) including at least one spacer element (11, 11ᵢ) presenting a cross-section that is hollow, defining the cooling channel (12) at least in part.

2. A rotor according to claim 1, at least one pole of the rotor including a spacer (10) extending continuously along at least a fraction of the length of the straight portion (6) so that the cooling channel (12) allows cooling fluid to flow longitudinally only within the windings (5).

3. A rotor according to claim 2, the spacer element (11) being a single element and extending between the two conductor groups (4₁, 4₂) continuously along the longitudinal axis (X).

4. A rotor according to claim 2, the spacer (10) having a plurality of spacer elements (11ᵢ) placed along the longitudinal axis (X).

5. A rotor according to any preceding claim, at least one rotor pole including a spacer (10) extending discontinuously along at least a fraction of the length of the straight portion (6), in particular over the entire length of the straight portion (6), so as to form at least one cooling channel (12) enabling the cooling liquid to flow transversely and longitudinally within the windings (5).

6. A rotor according to the preceding claim, the spacer (10) in the straight portion (6) including a plurality of support elements (13ᵢ) placed along the longitudinal axis (X).

7. A rotor according to the preceding claim, each support element (13ᵢ) including a spacer element (11ᵢ).

8. A rotor according to any preceding claim, the spacer element(s) (11, 11ᵢ) presenting flow disturbers (30) projecting into the channel over at least a fraction of their length(s), and in particular over their entire length(s).

9. A rotor according to the preceding claim, the disturbers (30) extending over at least a fraction of the height (h) of the channel.

10. A rotor according to any preceding claim, the spacer (10) in the straight portion (6) including spacer elements (11ᵢ) made with the help of stops inserted in the straight portion between two electrical conductor groups of the windings (5).

11. A rotor according to any one of claims 1 to 9, the
spacer in the straight portion (6) being incorporated in the system for clamping the electrical conductors of the straight portion, or the spacer (10) in the straight portion (6) including spacer elements (11ᵢ) made integrally with the laminations (2) of the rotor, or the spacer (10) in the straight portion (6) including at least two spacer elements located between at least two distinct electrical conductor groups (4₁, 4₂, 4₃), said spacer elements defining at least two superposed cooling channels (12).

12. A rotor according to any preceding claim, the ratio of
the accumulated total height (h) of the cooling channel(s) formed within the straight portion (6) of the windings of a pole through the total height (H-h) of the electrical conductors of the windings in the corresponding slot (33) of the rotor lying in the range 1% to 50%, and in particular in the range 10% to 30%.

13. A rotor according to any preceding claim, the ratio of
the width (ℓ) of the cooling channel (12) formed within the straight portions of the windings of a pole to the width (L) of the corresponding slot (33) being greater than 20%, in particular greater than 70%.

14. A rotor according to any preceding claim, the rotor
poles being projecting poles including pole shoes (3) and the spacer (10) in the straight portion (6) of the windings of at least one pole including at least one second spacer element (43ᵢ) placed along at least a fraction of the straight portion (6), in particular along the entire length of the straight portion, between two conductor groups of the windings and the pole shoe (3), or the spacer (10) in the straight portion (6) of the windings of at least one pole including at least one third spacer element (44ᵢ) placed along at least a fraction of the straight portion (6), in particular along the entire length of the straight portion, between a conductor group (4) of the windings and the bottom of the inter-pole space (E), or the spacer (10) in the straight portion (6) of the windings of at least one pole including at least one fourth spacer element (45ᵢ) placed along at least a fraction of the straight portion (6), in particular along the entire length of the straight portion, between a conductor group (4) of the windings and the pole body (20), the second and/or third and/or fourth spacer element (43ᵢ, 44ᵢ, and 45ᵢ) presenting a cross-section that is solid or hollow.

15. A rotor according to any preceding claim, at least one pole including a spacer (25) in the overhangs (7) of the windings (5), said spacer (25) being positioned between at least two conductor groups (4) of the winding overhangs (7), the spacer (25) in the overhangs (7) of the windings (5) being made using endpieces fastened to main brackets of the winding overhangs.
